# EUROPÄISCHE PATENTSCHRIFT

(11) **EP 2 064 945 B1**
(45) Veröffentlichungstag und Bekanntmachung des Hinweises auf die Patenterteilung: **05.03.2014**
(21) Anmeldenummer: 08019253.7
(22) Anmeldetag: 04.11.2008
(51) Int. Cl.: A01K 31/24

(54) **Taubenhaus**
Dovecote
Cage à pigeons

(30) Priorität: 30.11.2007 DE 102007057721
(43) Veröffentlichungstag der Anmeldung: 03.06.2009
(73) Patentinhaber: Hauß, Friedbert, 77694 Kehl (DE)
(72) Erfinder: Hauß, Friedbert, 77694 Kehl (DE)
(74) Vertreter: Lasch, Hartmut

(56) Entgegenhaltungen:
- DE-U1- 8 607 411
- FR-A1- 2 726 154
- FR-A5- 2 058 557
- GB-A- 191 117 310
- JP-A- 8 284 414
- US-A- 4 513 686

## Beschreibung

Die Erfindung betrifft ein Taubenhaus mit einer am Erdboden abgestützten Tragkonstruktion und einem auf der Tragkonstruktion angeordneten Nisthaus.

Um Tauben eine ausreichende Nistmöglichkeit zu geben, ist es bekannt, ein Taubenhaus aufzustellen, das über eine Tragkonstruktion üblicherweise in Form von einer oder mehreren vertikalen Stützen am Erdboden abgestützt ist, wobei am oberen, dem Erdboden abgewandten Ende der Stützen ein Nisthaus angeordnet ist, in dem mehrere Nistkammern ausgebildet sind. Derartige Taubenhäuser werden üblicherweise individuell oder mit einer vorgegebenen Anzahl von Nistkammern hergestellt. Das Dokument FR-A1-2726154 offenbart ein gattungsgemäßes Taubenhaus.

Um die Population freilebender Tauben kontrollieren und steuern zu können, ist es sinnvoll, auch auf öffentlichen Plätzen oder in öffentlichen Parks entsprechende Taubenhäuser aufzustellen. Die Größe des jeweils notwendigen Taubenhauses hängt jedoch von der Tauben-Population ab und sollte an diese angepasst,sein. Bei einem herkömmlichen Taubenhaus wäre somit für jeden Aufstellort eine Einzelanfertigung des Taubenhauses notwendig, was aufwendig und kostenintensiv ist.

Der Erfindung liegt die Aufgabe zugrunde, ein Taubenhaus der genannten Art zu schaffen, dessen Größe sich in einfacher Weise an die jeweils herrschende Tauben-Population anpassen lässt.

Diese Aufgabe wird erfindungsgemäß durch ein Taubenhaus mit den Merkmalen des Anspruchs 1 gelöst. Dabei ist vorgesehen, dass das Nisthaus aus mehreren übereinander angeordneten, modularen Nistebenen-Elementen aufgebaut ist, wobei jedes Nistebenen-Element zumindest ein Nistmodul mit mehreren Nistkammern umfasst. Dabei kann insbesondere vorgesehen sein, aus mehreren Nistmodulen jeweils ein Nistebenen-Element vorzufertigen und die vorgefertigten Nistebenen-Elemente aufeinander zu stapeln, bis die für das jeweilige Taubenhaus gewünschte Anzahl von Nistkammern erreicht ist. Auf diese Weise ist ein standardisierter Aufbau erreicht, bei dem der Benutzer die Größe des Taubenhauses und die Anzahl der Nistkammern in einfacher Weise an die Tauben-Population anpassen kann, indem er die entsprechend notwendige Anzahl von Nistebenen-Elementen übereinandergestapelt.

In der Erfindung ist vorgesehen, dass das Nisthaus einen zentralen Zugangsschacht aufweist und dass die Nistkammern vom Zugangsschacht aus zugänglich sind. Dies wird dadurch erreicht, dass jedes Nistebenen-Element ringartig aufgebaut ist und in seiner Mitte einen Abschnitt des Zugangsschachtes bildet. Mehrere übereinander angeordnete Nistebenen-Elemente weisen somit einen rohrförmigen Aufbau auf, wobei der Zugangsschacht in der Mitte dieses Aufbaus angeordnet ist.

Ein Benutzer kann in den Zugangsschacht einsteigen und hat von diesem aus Zugang auf alle Nistkammern, was notwendig ist, um die Tauben-Population zu steuern, indem beispielsweise Eier aus den Nistkammern entfernt werden.

Um zu verhindern, dass unbefugte Personen Zugang zu dem Zugangsschacht haben, kann in Weiterbildung vorgesehen sein, den Zugangsschacht mittels einer Klappe verschließbar auszugestalten, wobei die Klappe vorzugsweise das untere Ende des Zugangsschachtes abdeckt. Wenn das Nisthaus mit keiner speziellen Dachkonstruktion ausgebildet ist, kann auch am oberen Ende des Zugangsschachtes eine entsprechende Klappe vorgesehen sein.

In bevorzugter Ausgestaltung der Erfindung ist vorgesehen, dass jede Nistebene von vier Nistmodulen gebildet ist, die die Seiten eines Rechtecks bilden, und dass in den Eckpunkten des Rechtecks zusätzlich Nistkästen angeordnet sind. Diese zusätzlichen Nistkästen können anderen Vogelarten als Nistplatz dienen, die in der jeweiligen Umgebung heimisch sind.

Vorzugsweise umfasst jedes Nistmodul 3 bis 6 Nistkammern, die insbesondere in einer Reihe nebeneinander angeordnet sind.

In Weiterbildung der Erfindung ist vorgesehen, dass jede Nistkammer eine zur Außenseite des Taubenhauses öffnende Einflugöffnung aufweist, durch die die Taube die Nistkammer betreten kann. Die Einflugöffnung kann mittels einer Außenklappe oder mittels eines Außenschiebers verschließbar sein, um zu verhindern, dass die Taube die Nistkammer betritt, während der Benutzer die Nistkammer vom Zugangsschacht aus säubert, instandsetzt oder Eier aus dem Taubennest entfernt. Vorzugsweise sind die Bewegungen der Außenklappen oder Außenschieber der Nistkammern eines Nistmoduls oder sogar mehrerer oder aller Nistmodule miteinander gekoppelt, so dass alle Einflugöffnungen der Nistkammern eines oder mehrerer Nistmodule gleichzeitig geöffnet und geschlossen werden können, indem beispielsweise ein Benutzer eine einzige, gemeinsame Betätigungseinrichtung, beispielsweise ein Zugseil betätigt.

Jede Nistkammer besitzt desweiteren eine zum Zugangsschacht öffnende Zugangsöffnung, die ebenfalls mittels einer Zugangsklappe verschließbar sein kann. Es hat sich als vorteilhaft erwiesen, wenn der Benutzer auch bei geschlossener Zugangsklappe vom Zugangsschacht aus in die Nistkammer hineinschauen kann. Dies kann beispielsweise dadurch erreicht werden, dass die Zugangsklappe zumindest abschnittsweise transparent ausgebildet ist. Alternativ kann die Zugangsklappe auch von einem beispielsweise auf einem Rahmen sitzenden Kunststoff- oder Drahtnetz gebildet sein. In besonders bevorzugter Ausgestaltung ist vorgesehen, dass etwa die untere Hälfte der Zugangsöffnung von einer schwenkbaren, geschlossenen Zugangsklappe abgedeckt ist, während der verbleibende Bereich der Zugangsöffnung mittels eines Netzes oder einer mit einem Netz bespannten Klappe überdeckt ist.

Innerhalb der Nistkammer sollte eine Haltevorrichtung für eine Nistschale angeordnet sein. Vorzugsweise ist vorgesehen, die Haltevorrichtung als Metallring auszubilden, in den die Nistschale lose eingesetzt wird. Dies erleichtert es, die Nistschale zur Reinigung aus der Nistkammer zu entnehmen.

Ferner sollte in der Nistkammer und/oder außenseitig vor der Nistkammer eine Sitzstange vorgesehen sein, die in üblicher Weise horizontal ausgerichtet ist, und in bevorzugter Ausgestaltung mit der Haltevorrichtung der Nistschale, d.h. dem Metallring verbunden ist.

In bevorzugter Ausgestaltung der Erfindung ist vorgesehen, dass oberhalb des Nisthauses ein Dach angeordnet ist, das vorzugsweise so ausgestaltet ist, dass unterhalb des Daches ein Dachraum gebildet ist. In diesem Dachraum ist somit ein Lebensraum und eine Nistmöglichkeit für Fledermäuse gebildet, die durch seitliche Öffnungen in den Dachraum gelangen können.

Weitere Einzelheiten und Merkmale der Erfindung sind aus der folgenden Beschreibung eines Ausführungsbeispiels unter Bezugnahme auf die Zeichnungen ersichtlich. Es zeigen:
- Fig. 1: eine schematische Seitenansicht eines erfindungsgemäßen Taubenhauses,
- Fig. 2: ein Nistebenen-Element in perspektivischer Darstellung und
- Fig. 3: einen Querschnitt durch eine Nistkammer.

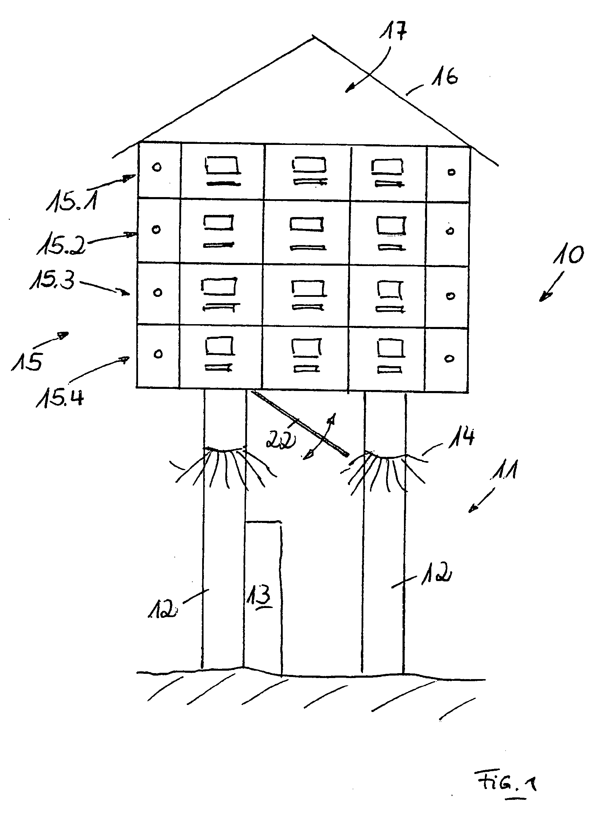

Ein in Figur 1 dargestelltes Taubenhaus 10 umfasst eine untere Tragkonstruktion 11 in Form mehrerer vertikaler Stützen 12, die mit ihrem unteren Ende am Erdboden E gehalten sind. Die Stützen 12 tragen auf ihrer dem Erdboden E abgewandten Oberseite ein Nisthaus 15, das im dargestellten Ausführungsbeispiel aus vier übereinander gestapelten Nistebenen-Elementen 15.1, 15.2, 15.3 und 15.4 aufgebaut ist. Auf das Nisthaus 15 ist ein schräges Dach 16 aufgesetzt, wobei unterhalb des Daches 16 ein Dachraum 17 gebildet ist, der als Nistmöglichkeit für Fledermäuse dient.

Jede vertikale Stütze 12 ist mit einem Kranz nach unten weisender, scharfkantiger Stäbe versehen, die einen Raubtierschutz 14 bilden und verhindern sollen, dass Marder oder ähnliche Raubtiere an den Stützen 12 hinaufklettern und zum Nisthaus 15 gelangen können.

In dem zwischen den Stützen 12 und unterhalb des Nisthauses 15 gebildeten Freiraum ist ein nur symbolisch angedeuteter Futterautomat 13 angeordnet, an dem jeder interessierte Benutzer nach entsprechendem Geldeinwurf ein Päckchen mit speziellem Taubenfutter erwerben kann. Auf diese Weise soll erreicht werden, dass die Tauben nur artgerechtes Futter erhalten.

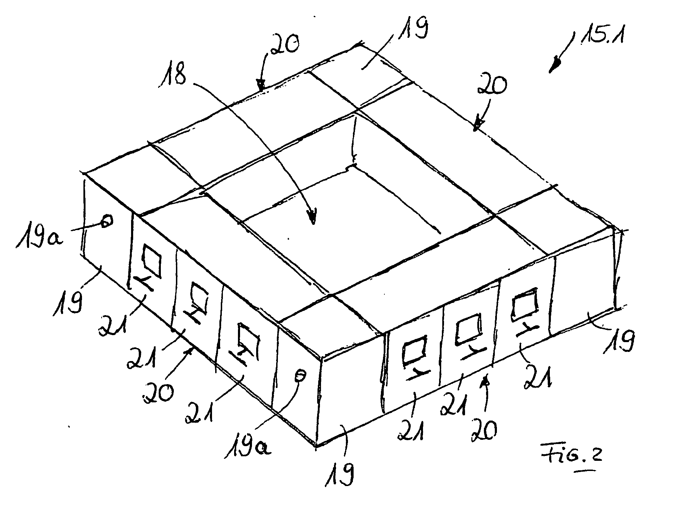

Das Nisthaus 15 besteht in genannter Weise aus mehreren Nistebenen-Elementen 15.1 bis 15.4, von denen in Figur 2 beispielhaft das Nistebenen-Element 15.1 dargestellt ist. Das Nistebenen-Element 15.1 umfasst im dargestellten Ausführungsbeispiel 4 Nistmodule 20, die jeweils 3 nebeneinander in Reihe angeordnete Nistkammern 21 umfassen und die Seiten eines Rechtecks bilden. In den Eckpunkten des Rechtecks sind zusätzliche Nistkästen 19 angeordnet, die eine Öffnung 19a aufweisen und als Nistplatz für andere Vogelarten dienen. Wie Figur 2 zeigt, besitzt das Nistebenen-Element 15.1 auf diese Weise eine ringförmige Gestalt mit einer Mittelöffnung, die einen Abschnitt eines Zugangsschachtes 18 bildet. Wenn mehrere Nistebenen-Elemente aufeinander gestapelt werden, fluchten die Mittelöffnungen miteinander und bilden somit den sich vertikal erstreckenden Zugangsacht 18, der so groß ist, dass ein Mensch zumindest mit seinem Oberkörper in den Schacht einsteigen und sich in diesem bewegen kann. Wie in Figur 1 angedeutet ist, lässt sich der Zugangsschacht 18 mittels einer auf der Unterseite des Nisthauses 15 angeordneten schwenkbaren Klappe 22 verschließen, um unbefugten Personen den Zugang zu dem Zugangsschacht 18 zu verwehren.

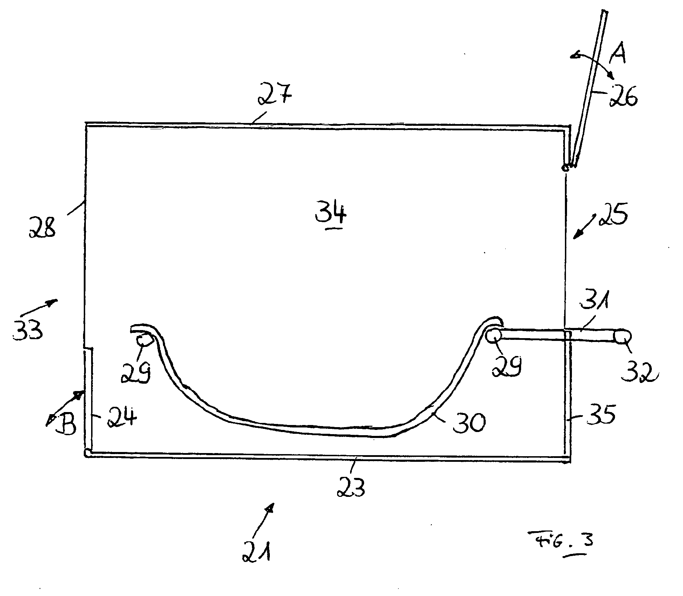

In dem dargestellten Ausführungsbeispiel besteht jedes Nistmodul 20 aus drei Nistkammern 21, die in Reihe nebeneinander angeordnet sind. Der Aufbau der einzelnen Nistkammern 21 ist in Figur 3 dargestellt. Jede Nistkammer 21 besitzt eine Bodenplatte 23, eine Deckplatte 27 und zwei Seitenwände 34, von denen nur eine dargestellt ist. In einer Vorderwand 35 ist eine Einflugöffnung 25 ausgebildet, die mittels einer am oberen Ende schwenkbar gelagerten Außenklappe 26 verschließbar ist, wie es durch den Doppelpfeil A angedeutet ist. Alternativ kann die Einflugöffnung 25 auch mittels einer vorzugsweise vertikal verschieblichen Verschlussplatte nach Art eines Schiebers verschlossen werden.

Die der Vorderwand 35 entgegengesetzte Rückseite der Nistkammer 21 ist offen und bildet eine Zugangsöffnung 33. Sie lässt sich mittels einer in der unteren Hälfte der Rückseite angeordneten, am unteren Ende schwenkbar gelagerten Zugangsklappe 24 öffnen, wie es durch den Doppelpfeil B angedeutet ist. Der obere Bereich der Zugangsöffnung 33 ist durch ein Netz 28 abgedeckt, so dass ein Benutzer, der sich in dem Zugangsschacht 18 befindet, durch das Netz 28 hindurch in die Nistkammer 21 hineinschauen kann. Das Netz 28 kann angehoben werden, so dass der Benutzer Zugriff auf das Innere der Nistkammer 21 hat. Gegebenenfalls wird zusätzlich die Zugangsklappe 24 in die Öffnungsstellung geschwenkt.

Innerhalb der Nistkammer 21 befindet sich eine Haltevorrichtung 29 in Form eines Metallrings, in den eine Nistschale 30 mit ihrem umlaufenden Randbereich frei einhängbar ist. An dem der Einflugöffnung 25 zugewandten Ende der Haltevorrichtung ist ein Verbindungssteg 31 angeformt, der in eine quer verlaufende Sitzstange 32 übergeht, die außenseitig der Nistkammer 21 unterhalb der Einflugöffnung 25 angeordnet ist.

## Patentansprüche

1. Taubenhaus mit einer am Erdboden abgestützten Tragkonstruktion (11) und einem auf der Tragkonstruktion (11) angeordneten Nisthaus (15), das aus mehreren übereinander angeordneten modularen Nistebenen-Elementen (15.1, 15.2, 15.3, 15.4) aufgebaut ist, wobei jedes Nistebenen-Element (15.1, 15.2, 15.3, 15.4) zumindest ein Nistmodul (20) mit mehreren Nistkammern (21) umfasst, das Nisthaus (15) einen zentralen Zugangsschacht (18) aufweist und die Nistkammern (21) von dem Zugangsschacht (18) aus zugänglich sind, **dadurch gekennzeichnet, dass** jedes Nistebenen-Element (15.1, 15.2, 15.3, 15,.4) ringartig aufgebaut ist und in seiner Mitte einen Abschnitt des Zugangsschachts (18) bildet.

2. Taubenhaus nach Anspruch 1, **dadurch gekennzeichnet, dass** der Zugangsschacht (18) mittels einer Klappe (22) verschließbar ist.

3. Taubenhaus nach einem der Ansprüche 1 oder 2, **dadurch gekennzeichnet, dass** jedes Nistebenen-Element (15.1, 15.2, 15.3, 15.4) von vier Nistmodulen (20) gebildet ist, die die Seiten eines Rechtecks bilden, und dass in den Eckpunkten des Rechtecks zusätzliche Nistkästen (19) angeordnet sind.

4. Taubenhaus nach einem der Ansprüche 1 bis 3, **dadurch gekennzeichnet, dass** jedes Nistmodul (20) 3 bis 6 Nistkammern (21) umfasst.

5. Taubenhaus nach einem der Ansprüche 1 bis 4, **dadurch gekennzeichnet, dass** jede Nistkammer (21) eine zur Außenseite des Taubenhauses öffnende Einflugöffnung (25) aufweist.

6. Taubenhaus nach Anspruch 5, **dadurch gekennzeichnet, dass** die Einflugöffnung (25) mittels einer Außenklappe (26) oder eines Außenschiebers verschließbar ist.

7. Taubenhaus nach einem der Ansprüche 1 bis 6, **dadurch gekennzeichnet, dass** jede Nistkammer (21) eine zum Zugangsschacht (18) öffnende Zugangsöffnung (33) aufweist.

8. Taubenhaus nach Anspruch 7, **dadurch gekennzeichnet, dass** die Zugangsöffnung (33) mittels einer Zugangsklappe (24) und/oder mittels eines Netzes (28) verschließbar ist.

9. Taubenhaus nach einem der Ansprüche 1 bis 8, **dadurch gekennzeichnet, dass** in der Nistkammer (21) eine Haltevorrichtung (29) für eine Nistschale (30) angeordnet ist.

10. Taubenhaus nach einem der Ansprüche 1 bis 9, **dadurch gekennzeichnet, dass** in der Nistkammer (21) und/oder außen vor der Nistkammer (21) eine Sitzstange (32) vorgesehen ist.

11. Taubenhaus nach Anspruch 9 und 10, **dadurch gekennzeichnet, dass** die Sitzstange (32) mit der Haltevorrichtung (29) verbunden ist.

12. Taubenhaus nach einem der Ansprüche 1 bis 11, **dadurch gekennzeichnet, dass** oberhalb des Nisthauses (15) ein Dach (16) angeordnet ist.

13. Taubenhaus nach Anspruch 12, **dadurch gekennzeichnet, dass** unterhalb des Dachs (16) ein Dachraum (17) gebildet ist.

## Claims

1. Dovecote with a carrier structure (11) supported on the ground, and with a nesting house (15) which is arranged on the carrier structure (11) and is composed of a plurality of modular nesting level elements (15.1, 15.2, 15.3, 15.4) arranged one on top of another, each nesting level element (15.1, 15.2, 15.3, 15.4) comprising at least one nesting module (20) with a plurality of nesting chambers (21), the nesting house (15) having a central access shaft (18), and the nesting chambers (21) being accessible from the access shaft (18), **characterized in that** each nesting level element (15.1, 15.2, 15.3, 15.4) has a ring-like design and, at its centre, forms a portion of the access shaft (18).

2. Dovecote according to Claim 1, **characterized in that** the access shaft (18) can be closed by means of a flap (22).

3. Dovecote according to either of Claims 1 and 2, **characterized in that** each nesting level element (15.1, 15.2, 15.3, 15.4) is formed by four nesting modules (20), which form the sides of a rectangle, and **in that** additional nesting boxes (19) are arranged at the corners of the rectangle.

4. Dovecote according to one of Claims 1 to 3, **characterized in that** each nesting module (20) comprises 3 to 6 nesting chambers (21).

5. Dovecote according to one of Claims 1 to 4, **characterized in that** each nesting chamber (21) has an entrance hole (25) that opens to the outside of the dovecote.

6. Dovecote according to Claim 5, **characterized in that** the entrance hole (25) can be closed by means of an outer flap (26) or an outer slide.

7. Dovecote according to one of Claims 1 to 6, **characterized in that** each nesting chamber (21) has an access hole (33) that opens into the access shaft (18).

8. Dovecote according to Claim 7, **characterized in that** the access hole (33) can be closed by means of an access flap (24) and/or by means of a net (28).

9. Dovecote according to one of Claims 1 to 8, **characterized in that** a holding device (29) for a nesting dish (30) is arranged in the nesting chamber (21).

10. Dovecote according to one of Claims 1 to 9, **characterized in that** a perch (32) is provided in the nesting chamber (21) and/or outside in front of the nesting chamber (21).

11. Dovecote according to Claims 9 and 10, **characterized in that** the perch (32) is connected to the holding device (29).

12. Dovecote according to one of Claims 1 to 11, **characterized in that** a roof (16) is arranged above the nesting house (15).

13. Dovecote according to Claim 12, **characterized in that** a roof space (17) is formed under the roof (16).

## Revendications

1. Pigeonnier doté d'une construction portante (11) soutenue au niveau du plancher et d'un abri de nidification (15) disposé sur la construction portante (11), ledit abri étant construit à partir de plusieurs éléments plans de nidification (15.1, 15.2, 15.3, 15.4) modulaires disposés les uns au-dessus des autres, chaque élément plan de nidification (15.1, 15.2, 15.3, 15.4) comprenant au moins un module de nidification (20) doté de plusieurs compartiments de nidification (21), l'abri de nidification (15) comportant une cheminée d'accès (18) centrale et les compartiments de nidification (21) étant accessibles en partant de la cheminée d'accès (18), **caractérisé en ce que** chaque élément plan de nidification (15.1, 15.2, 15.3, 15.4) prend une forme annulaire et forme en son centre une section de la cheminée d'accès (18).

2. Pigeonnier selon la revendication 1, **caractérisé en ce que** la cheminée d'accès (18) peut être refermée par un clapet (22).

3. Pigeonnier selon l'une quelconque des revendications 1 ou 2, **caractérisé en ce que** chaque élément plan de nidification (15.1, 15.2, 15.3, 15.4) est formé par quatre modules de nidification (20) formant les côtés d'un rectangle et que des caissons de nidification (19) supplémentaires sont disposés dans les coins du rectangle.

4. Pigeonnier selon l'une quelconque des revendications 1 à 3, **caractérisé en ce que** chaque module de nidification (20) comporte 3 à 6 compartiments de nidification (21).

5. Pigeonnier selon l'une quelconque des revendications 1 à 4, **caractérisé en ce que** chaque compartiment de nidification (21) comporte une ouverture d'entrée par les airs (25) s'ouvrant en direction du côté extérieur du pigeonnier.

6. Pigeonnier selon la revendication 5, **caractérisé en ce que** l'ouverture d'entrée par les airs (25) peut être fermée par un clapet extérieur (26) ou un coulisseau extérieur.

7. Pigeonnier selon l'une quelconque des revendications 1 à 6, **caractérisé en ce que** chaque compartiment de nidification (21) comporte une ouverture d'accès (33) s'ouvrant en direction de la cheminée d'accès (18).

8. Pigeonnier selon la revendication 7, **caractérisé en ce que** l'ouverture d'accès (33) peut être refermée au moyen d'un clapet d'accès (24) et/ou d'un filet (28).

9. Pigeonnier selon l'une quelconque des revendications 1 à 8, **caractérisé en ce qu'**un dispositif de maintien (29) de coque de nidification (30) est disposé dans le compartiment de nidification (21).

10. Pigeonnier selon l'une quelconque des revendications 1 à 9, **caractérisé en ce qu'**une barre d'assise (32) est prévue dans le compartiment de nidification (21) et/ou à l'extérieur, devant le compartiment de nidification (21).

11. Pigeonnier selon les revendications 9 et 10, **caractérisé en ce que** la barre d'assise (32) est reliée au dispositif de maintien (29).

12. Pigeonnier selon l'une quelconque des revendications 1 à 11, **caractérisé en ce qu'**un toit (16) est disposé au-dessus de l'abri de nidification (15).

13. Pigeonnier selon la revendication 12, **caractérisé en ce qu'**une chambre sous toit (17) est formée en dessous du toit (16).
